# EUROPÄISCHE PATENTANMELDUNG

(11) **EP 0 759 278 A1**
(43) Veröffentlichungstag der Anmeldung: **26.02.1997**
(21) Anmeldenummer: 96111799.1
(22) Anmeldetag: 23.07.1996
(51) Int. Cl.: A47B 65/00, A47B 81/06

(54) **Stützsystem**

(30) Priorität: 19.08.1995 DE 19530570
(71) Anmelder: Huschke, Bruno, 86179 Augsburg (DE)
(72) Erfinder: Huschke, Bruno, 86179 Augsburg (DE)
(74) Vertreter: Vetter, Ewald Otto, Dipl.-Ing.

(57) **Zusammenfassung**

Stützsystem (1) zum Stützen von nebeneinander aufgestellten plattenartigen Körpern mit geringer oder ohne eigene Standfestigkeit, wie zum Beispiel Schallplatten, Ordner, vorzugsweise Bücher, beinhaltend Stützsystem-Elemente, welche entlang einer Stützsystem-Längsrichtung (3) angeordnet sind und welche in Stützsystem-Längsrichtung (3) je mindestens einen horizontalen Auflageschenkel (12;16,20) in einer horizontalen Auflageebene (14) aufweisen, wobei das Stützsystem (1) in Stützsystem-Längsrichtung (3) von zwei Seiten-Stützelementen (4,10) mit je einem vertikalen Stützschenkel (28) begrenzt wird, welcher senkrecht zur Stützsystem-Längsrichtung (3) ist, wobei Steckverbindungsmittel (24,26) vorgesehen sind, welche zumindest teilweise durch die horizontalen Auflageschenkel (12;16,20) gebildet und vertikal ineinandersteckbar sind und im ineinandergesteckten Zustand einander gegenseitig derart umgreifen, daß sie innerhalb der Auflageebene (14) ein Verrutschen der ineinandergesteckten Stützsystem-Elemente (4,6,8,10) relativ zueinander verhindern und die Stützsystem-Elemente (4,6,8,10) formschlüssig miteinander verbinden.

## Beschreibung

Die Erfindung betrifft ein Stützsystem zum Stützen von nebeneinander aufgestellten plattenartigen Körpern mit geringer oder ohne eigene Standfestigkeit, wie zum Beispiel Schallplatten, Ordner, vorzugsweise Bücher, gemäß dem Oberbegriff von Anspruch 1.

Ein solches ist aus der DE-U-81 12 612.3 bekannt und beinhaltet ein Bücherstützenpaar, deren Auflageschenkel in Stützen-Längsrichtung zueinander gerichtet sind. Die Auflageschenkel der Bücherstützen haben in Stützen-Längsrichtung weisende gabelartige Vorsprünge, welche zahnartig ineinandergreifen. Damit wird eine Lagefixierung der beiden Bücherstützen senkrecht zur Stützen-Längsrichtung erreicht. Nachteilig ist dabei, daß die Bücherstützen in Stützen-Längsrichtung verrutschen oder kippen können. Dies ist besonders dann störend, wenn Bücher in ein bereits durch die Bücherstützen gestützes Bücherpaket eingeschoben werden und die Bücherstützen dabei voneinander weg gedrückt werden, wodurch sich die Stützeigenschaften erheblich verschlechtern. Die Stützkraft der bekannten Lösung hängt zudem maßgeblich vom Eigengewicht der abgestützten Bücher ab.

Durch die Erfindung soll die Aufgabe gelöst werden, ein Stützsystem zum Stützen von plattenartigen Körpern so weiterzubilden, daß seine Stützwirkung verbessert wird, insbesondere wenn viele plattenartige Körper nebeneinander abgestützt werden sollen.

Diese Aufgabe wird gemäß der Erfindung durch die kennzeichnenden Merkmale des Anspruchs 1 gelöst.

Durch die Steckverbindungsmittel greifen die einzelnen Stützsystem-Elemente formschlüssig ineinander, so daß ein Verrutschen der Elemente in der Auflageebene relativ zueinander nicht möglich ist. Dadurch wird eine verbesserte Stützwirkung erzielt.

Die Erfindung wird im folgenden anhand mehrerer Ausführungsbeispiele mit Bezug auf die Zeichnungen näher beschrieben. Sie zeigen in
- Fig.1: eine Seitenansicht einer bevorzugten Ausführungsform eines Stützsystems gemäß der Erfindung zum Stützen von Büchern;
- Fig.2: eine Draufsicht auf das Stützsystem von Fig.1;
- Fig.3: einen Ausschnitt einer Draufsicht auf eine zweite Ausführungsform gemäß der Erfindung;
- Fig.4: einen Ausschnitt einer Draufsicht auf eine dritte Ausführungsform gemäß der Erfindung;
- Fig.5: einen Ausschnitt einer perspektivischen Darstellung einer vierten Ausführungsform gemäß der Erfindung;
- Fig.6: einen Ausschnitt einer Draufsicht auf eine fünfte Ausführungsform gemäß der Erfindung.

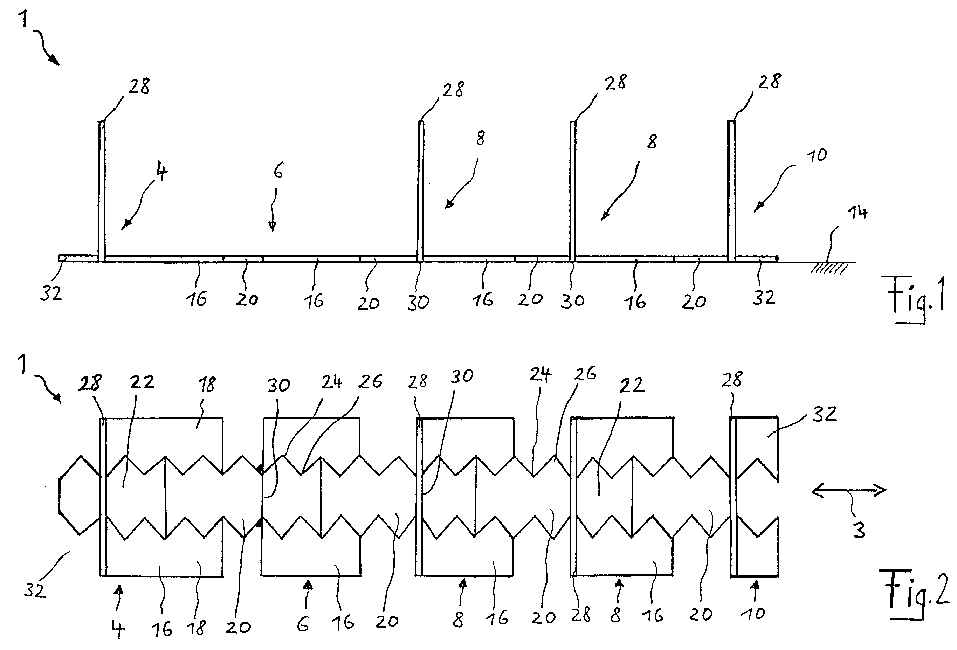

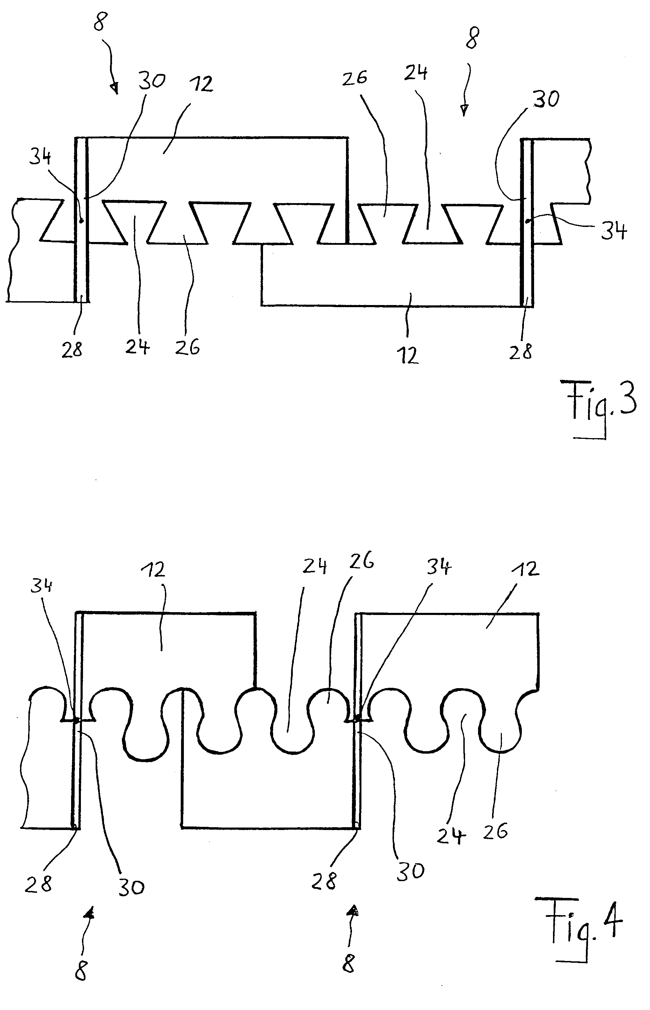

In der in den Fig.1 und 2 gezeigten bevorzugten Ausführungsform dient das Stützsystem 1 gemäß der Erfindung zum Stützen von Büchern oder anderen Gegenständen (nicht gezeigt). Die gezeigte Ausführungsform des Stützsystems 1 besteht aus Stützsystem-Elementen, von links nach rechts in Stützsystem-Längsrichtung 3 gesehen, aus einem ersten T-förmigen Seiten-Stützelement 4, einem Distanz-Element 6, zwei T-förmigen Zwischen-Stützelementen 8 und einem zweiten T-förmigen Seiten-Stützelement 10, wobei die beiden T-förmigen Seiten-Stützelemente 4,10 das Stützsystem 1 jeweils in Stützsystem-Längsrichtung 3 begrenzen. Alle diese Stützsystem-Elemente 4,6,8,10 weisen mindestens einen horizontalen Auflageschenkel 16,20 in einer horizontalen Auflagebene 14 auf, welche im vorliegenden Fall durch einen Bücherregal-Boden gebildet wird.

Wie Fig.2 zeigt, sind bei der bevorzugten Ausführungsform zwei Arten von Auflageschenkeln, erste und zweite Auflageschenkel, vorgesehen, wobei die ersten Auflageschenkel 16 u-förmig sind und je einen rechten und einen linken Auflageschenkel-Teil 18 aufweisen, welche sich in Stützsystem-Längsrichtung 3 erstrecken. Die zweiten Auflageschenkel 20 sind jeweils in einen Zwischenraum 22 zwischen dem rechten und dem linken Auflageschenkel-Teil 18 der ersten Auflageschenkel 16 vertikal eingesteckt.

Die linken und rechten Auflageschenkel-Teile 18 der ersten Auflageschenkel 16 weisen jeweils an ihrer dem Zwischenraum 22 zugewandten Seite dreieckförmige Steckausnehmungen 24 und dreieckförmige Steckvorsprünge 26 auf, welche in Stützsystem-Längsrichtung 3 abwechselnd und mit gleichem Abstand voneinander angeordnet sind.

Die zweiten Auflageschenkel 20 sind zungenförmig und weisen ebenfalls dreieckförmige Steckausnehmungen 24 und dreieckförmige Steckvorsprünge 26 auf, welche entlang der Stützsystem-Längsrichtung 3 abwechselnd und mit demselben Abstand voneinander angeordnet sind wie die Steckvorsprünge 26 und die Steckausnehmungen 24 entlang der ersten Auflageschenkel 16. Bei der bevorzugten Ausführungsform von Fig.2 sind die dreieckförmigen Steckvorsprünge 26 und Steckausnehmungen 24 so angeordnet, daß die Grundlinie einer jeden Dreieckform parallel zur Stützsystem-Längsrichtung 3 ist.

Ein Teil der Steckvorsprünge 26 eines jeden ersten Auflageschenkels 16 ist jeweils in einen Teil der Steckausnehmungen 24 eines jeden zweiten Auflageschenkels 20 in vertikaler Richtung nahezu spielfrei eingesteckt und umgekehrt, so daß jeweils die ersten und zweiten Auflageschenkel 16,20 im ineinandergesteckten Zustand formschlüssig miteinander verbunden sind. Durch die formschlüssige Verbindung der Auflageschenkel 16,20 ist ein Verrutschen der Stützsystem-Elemente 4,6,8,10 in der Auflageebene 14 relativ zueinander nicht möglich, wodurch eine verbesserte Stützwirkung erzielt wird.

Da die Steckvorsprünge 26 und die Steckausnehmungen 24 in Stützsystem-Längsrichtung 3 jeweils den gleichen Abstand voneinander haben, ist die Länge des Stützsystems 1 entlang der Stützsystem-Längsrichtung 3 stufenweise veränderbar, wobei ein Stufensprung gleich dem Betrag der Teilung ist, welche den Steckvorsprüngen 26 und den Steckausnehmungen 24 gemeinsam ist.

Bei der bevorzugten Ausführungsform von Fig.2 besitzen die Distanz-Elemente 6 und die Zwischen-Elemente 8 jeweils verschiedenartige Auflageschenkel, nämlich jeweils einen ersten Auflageschenkel 16 und einen zweiten Auflageschenkel 16. Dies ist notwendig, damit das Stützsystem 1 modular ist und verschiedene Kombinationen und Reihenfolgen von Stützsystem-Elementen 4,6,8,10 zusammengesteckt werden können. Dazu muß, wie in Fig.2 gezeigt, entweder das erste Seiten-Stützelement 4 einen ersten Auflageschenkel 16 und das Zweite Seiten-Stützelement 10 einen zweiten Auflageschenkel 20 aufweisen oder umgekehrt.

Die beiden Seiten-Stützelemente 4,10 und die ZwischenStützelemente 8 haben jeweils einen vertikalen Stützschenkel 28, welcher senkrecht zur Stützsystem-Längsrichtung 3 ist. Dieser vertikale Stützschenkel 28 ist bei den Zwischen-Stützelementen 8 an einer Stoßkante 30 zwischen dem ersten und dem zweiten Auflageschenkel 16,20 angeordnet, welche im wesentlichen gleich lang sind. Um die Kippstabilität zu erhöhen, haben die beiden Seiten-Stützelemente 4,10 an ihrer bezüglich des Stützsystems 1 nach außen weisenden Seite zusätzlich je einen horizontalen Fuß 32. Das Distanz-Element 6 dient dazu, den Abstand zwischen zwei vertikalen Stützschenkeln 28 zu vergrößern, damit auch mehrere relativ breite Körper, wie z.B. Ordner, im Stützsystem 1 nebeneinander aufgereiht werden können. Sie haben deshalb keinen vertikalen Stützschenkel 28.

Sämtliche Stützsystem-Elemente 4,6,8,10 sind innerhalb des Stützsystems 1 so angeordnet, daß die ineinander gesteckten Stützsystem-Elemente 4,6,8,10 eine gerade Linie entlang der Stützsystem-Längsrichtung 3 bilden.

Bei einem Stützsystem, welches ausschließlich aus zwei Seiten-Stützelementen 4,10 der beschriebenen Art besteht, ist die Längeneinstellbarkeit des Stützsystems begrenzt, da dann dessen maximale und minimale Länge von der Länge der Auflageschenkel 16,20 der Seiten-Stützelemente 4,10 abhängt, wohingegen durch Einstecken von Distanz-Elementen 6 oder Zwischen-Stützelementen 8 eine nach oben hin unbegrenzte Längeneinstellung möglich ist.

Die Bücher (nicht gezeigt), welche vom Stützsystem 1 gestützt werden, stehen mit einem Teil ihres Umfangsrandes auf den Auflageschenkeln 16,20 der Stützsystem-Elemente 4,6,8,10 auf, wobei die in Stützsystem-Längsrichtung 3 jeweils äußersten Bücher (nicht gezeigt) einer durchgehenden Bücherreihe sich an den vertikalen Stützschenkeln 28 der Seiten-Stützelemente 4,10 und/oder der Zwischen-Stützelemente 8 abstützen.

Bei der bevorzugten Ausführungsform werden die Stützsystem-Elemente 4,6,8,10 aus flächigem Material, vorzugsweise aus Blech gestanzt oder lasergeschnitten. Dabei werden jeweils die ersten Auflageschenkel 16 und die zweiten Auflageschenkel 20 in einem Fertigungsschritt aus einem Streifen des flächigen Materials gestanzt oder lasergeschnitten, wobei der Stanz-oder Schneidrest des ersten Auflageschenkels 16 den zweiten Auflageschenkel 20 bildet und umgekehrt. Dadurch werden Verschnitt und Fertigungsaufwand minimiert.

Für die folgende Beschreibung von weiteren Ausführungsformen sind jeweils funktional gleich wirkende Teile mit gleichen Bezugszahlen versehen.

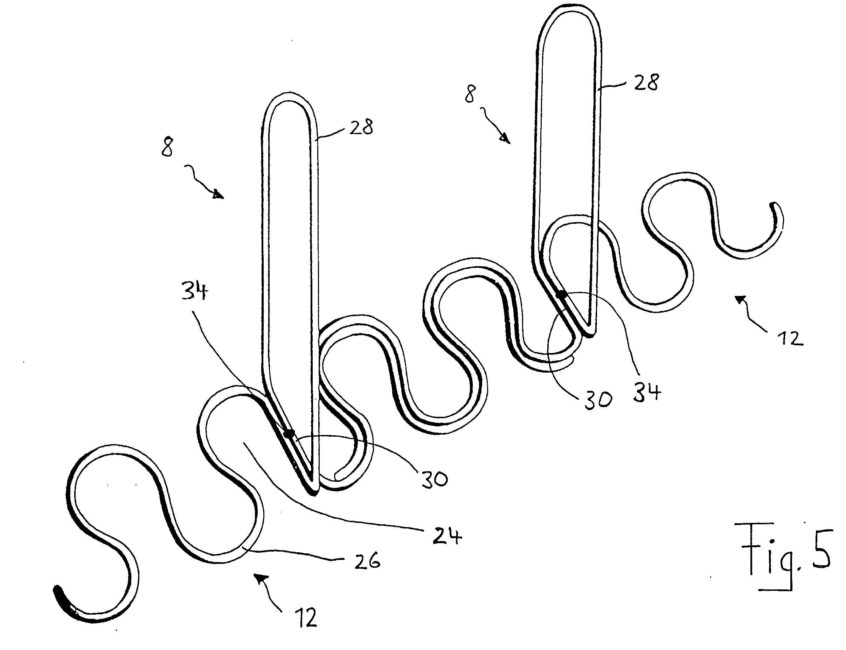

Fig.3 zeigt eine Verbindungsstelle zwischen einem rechten Auflageschenkel 12, welcher an einem Zwischen-Stützelement 8 angeordnet ist, und einem linken Auflageschenkel 12, welcher ebenfalls an einem Zwischen-Stützelement 8 angeordnet ist. Wie dort zu sehen, sind die Steckvorsprünge 26 und die Steckausnehmungen 24 gemäß einer zweiten Ausführungsform der Erfindung trapezförmig. Die Steckausnehmungen 24 und die Steckvorsprünge 26 haben diesselbe trapezförmige Kontur, wobei die Innenmaße der Steckausnehmungen 24 den Außenmaßen der Steckvorsprünge 26 entsprechen und die Steckausnehmungen 24 die Steckvorsprünge 26 um mindestens 180 Grad umgreifen, so daß die Stützsystem-Elemente 4,6,8,10 im ineinandergesteckten Zustand formschlüssig miteinander verbunden sind.

Damit die ineinander gesteckten Stützsystem-Elemente 4,6,8,10 eine gerade Linie in Stützsystem-Längsrichtung 3 bilden und damit verschiedene Kombinationen von Stützsystem-Elementen, beispielsweise analog zu der in den Fig.1 und 2 gezeigten Konstellation, möglich sind, weisen bei der Ausführungsform gemäß Fig.3 die Zwischen-Stützelemente 8 und die Distanz-Elemente 6 jeweils zwei gleiche Auflageschenkel 12 auf, welche punktsymmetrisch zueinander angeordnet sind, wobei der Spiegelpunkt 34 der Längs-Mittelpunkt der Stoßkante 30 der beiden Auflageschenkel 12 ist.

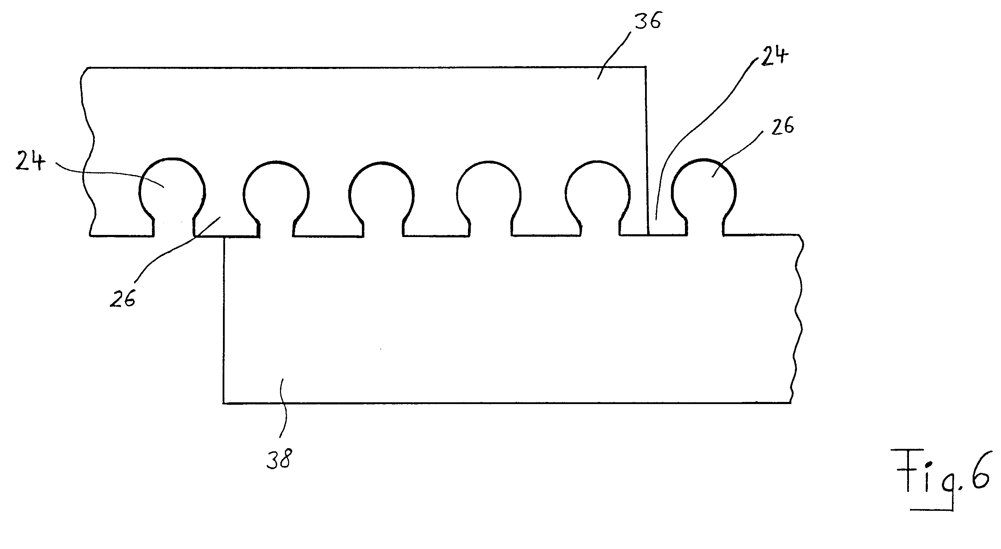

In Fig.4 ist eine ähnliche Verbindungsstelle wie in Fig.3 gezeigt. Hier sind die Steckvorsprünge 26 und die Steckausnehmungen 24 kreisbogenförmig, wobei die Steckausnehmungen 24 die Steckvorsprünge 26 ebenfalls um mindestens 180 Grad umgreifen. Durch das Umgreifen werden die Stützsystem-Elemente 4,6,8,10 in der Auflageebene 14 relativ zueinander in Position gehalten, weshalb es bei den in den Fig.3 und 4 gezeigten Ausführungsformen nicht notwendig ist, daß sich zusätzlich die Auflageschenkel 12 umgreifen. Eine Ausführungsform, bei welcher sich erste und zweite Auflageschenkel 16,20 gemäß der Ausführungsform von Fig.1 und 2 und die Steckverbindungselemente 24,26 gemäß den Ausführungsformen von Fig.3 und 4 umgreifen, ist aber dennoch möglich.

Fig.5 zeigt eine vierte Ausführungsform gemäß der Erfindung, bei welcher die Stützsystem-Elemente 4,5,8,10 aus Draht gebogen sind, wobei die Steckvorsprünge 26 und die Steckausnehmungen 24 kreisbogenförmig sind. Jedes Stützsystem-Element 4,6,8,10 besteht aus einem Stück Draht, es kann aber auch aus mehreren Drahtabschnitten bestehen, welche miteinander verbunden sind. Die Verwendung von Draht ist nicht auf kreisbogenförmige Steckvorsprünge 26 und Steckausnehmungen 24 beschränkt, sondern es können auch die Formen gemäß der ersten und zweiten Ausführungsform sowie andere Formen aus Draht gebogen werden.

Gemäß einer fünften Ausführungsform, welche in Fig.6 gezeigt ist, sind an jedem Auflageschenkel jeweils verschiedenartige oder verschiedenförmige Steckausnehmungen 24 und Steckvorsprünge 26 abwechselnd angeordnet. Im Fall von Fig.6 sind bei einem dritten Auflageschenkel 36 die Steckausnehmungen 24 kreisbogenförmig und die Steckvorsprünge 26 hinterschnitten, während bei einem vierten Auflageschenkel 38 die Steckausnehmungen 24 hinterschnitten und die Steckvorsprünge 26 kreisbogenförmig sind. Im ineinandergesteckten Zustand sind die hinterschnittenen Steckvorsprünge 26 des dritten Auflageschenkels 36 in die hinterschnittenen Steckausnehmungen 24 des vierten Auflageschenkels 38 und die kreisbogenförmigen Steckvorsprünge 26 des vierten Auflageschenkels 38 in die kreisbogenförmigen Steckausnehmungen 24 des dritten Auflageschenkels 36 eingesteckt.

Bezogen auf die in den Fig.1 und 2 gezeigte Konstellation von Stützsystem-Elementen haben auch bei der fünften Ausführungsform von Fig.6 das Zwischen-Stützelement 8 und das Distanz-Element 6 jeweils verschiedene Auflageschenkel, nämlich jeweils einen dritten Auflageschenkel 36 und einen vierten Auflageschenkel 38, damit das Stützsystem 1 modular ist und verschiedene Kombinationen und Reihenfolgen von Stützsystem-Elementen 4,6,8,10 zusammengesteckt werden können. Dazu muß das erste Seiten-Stützelement 4 entweder einen dritten Auflageschenkel 36 und das zweite Seiten-Stützelement 10 einen vierten Auflageschenkel 38 aufweisen oder umgekehrt.

Durch die formschlüssige Verbindung der Auflageschenkel 12,16,20,36,38 wird ein definierter genauer Abstand der vertikalen Stützschenkel 28 erzielt. Durch Ineinanderstecken der Stützsystem-Elemente 4,6,8,10 in bestimmten Stufen oder durch Einfügen von Distanz-Elementen 6 oder kann dieser Abstand auf eine bestimmte Stapelbreite von abzustützenden Körpern abgestimmt werden.

Das Stützsystem 1 gemäß der Erfindung eignet sich nicht nur zum Abstützen von Büchern, sondern auch zum Stützen von nebeneinander aufstellbaren plattenartigen Körpern mit geringer oder ohne eigene Standfestigkeit, wie zum Beispiel Schallplatten oder Ordnern.

## Patentansprüche

1. Stützsystem (1) zum Stützen von nebeneinander aufgestellten plattenartigen Körpern mit geringer oder ohne eigene Standfestigkeit, wie zum Beispiel Schallplatten, Ordner, vorzugsweise Bücher, beinhaltend Stützsystem-Elemente, welche entlang einer Stützsystem-Längsrichtung (3) angeordnet sind und welche in Stützsystem-Längsrichtung (3) je mindestens einen horizontalen Auflageschenkel (12;16,20;36,38) in einer horizontalen Auflageebene (14) aufweisen, wobei das Stützsystem (1) in Stützsystem-Längsrichtung (3) von zwei Seiten-Stützelementen (4,10) mit je einem vertikalen Stützschenkel (28) begrenzt wird, welcher senkrecht zur Stützsystem-Längsrichtung (3) ist,
**dadurch gekennzeichnet**, daß Steckverbindungsmittel (24,26) vorgesehen sind, welche zumindest teilweise durch die horizontalen Auflageschenkel (12;16,20;36,38) gebildet und vertikal ineinandersteckbar sind und im ineinandergesteckten Zustand einander gegenseitig derart umgreifen, daß sie innerhalb der Auflageebene (14) ein Verrutschen der ineinandergesteckten Stützsystem-Elemente (4,6,8,10) relativ zueinander verhindern und die Stützsystem-Elemente (4,6,8,10) formschlüssig miteinander verbinden.

2. Stützsystem nach Anspruch 1,
**dadurch gekennzeichnet**, daß die Steckverbindungsmittel Steckvorsprünge (26) und Steckausnehmungen (24) beinhalten, welche in der Auflageebene (14) liegen, wobei die Innenkonturen der Steckausnehmungen (24) den Außenkonturen der Steckvorsprünge (26) entsprechen, so daß die Steckvorsprünge (26) in die Steckausnehmungen (24) nahezu spielfrei einsteckbar sind.

3. Stützsystem nach Anspruch 2,
**dadurch gekennzeichnet**, daß die Auflageschenkel (12;16,20;36,38) entlang der Stützsystem-Längsrichtung (3) abwechselnd Steckvorsprünge (26) und Steckausnehmungen (24) aufweisen, welche mit gleichem Abstand voneinander angeordnet sind, so daß die Auflageschenkel (12;16,20;36,38) derart ineinandersteckbar sind, daß die Länge des Stützsystems (1) entlang der Stützsystem-Längsrichtung (3) stufenweise veränderbar ist.

4. Stützsystem nach einem der Ansprüche 2 oder 3,
**dadurch gekennzeichnet**, daß die Steckausnehmungen (24) die Steckvorsprünge (26) um mehr als 180 Grad umgreifen.

5. Stützsystem nach Anspruch 4,
**dadurch gekennzeichnet**, daß die Steckvorsprünge (26) und die Steckausnehmungen (24) trapezförmig sind.

6. Stützsystem nach Anspruch 4,
**dadurch gekennzeichnet**, daß die Steckvorsprünge (26) und die Steckausnehmungen (24) kreisbogenförmig sind.

7. Stützsystem nach einem der vorhergehenden Ansprüche,
**dadurch gekennzeichnet**, daß es mindestens ein T-förmiges Zwischen-Stützelement (8) beinhaltet, welches zwischen den beiden Seiten-Stützelementen (4,10) angeordnet ist und welches zwei horizontale, im wesentlichen gleich lange Auflageschenkel (12;16,20;36,38) in Stützsystem-Längsrichtung (3) und einen vertikalen Stützschenkel (28) senkrecht zur Stützsystem-Längsrichtung (3) an einer Stoßkante (30) zwischen den beiden Auflageschenkeln (12;16,20;36,38) aufweist.

8. Stützsystem nach einem der vorhergehenden Ansprüche,
**dadurch gekennzeichnet**, daß es mindestens ein Distanz-Element (6) beinhaltet, welches zwischen den beiden Seiten-Stützelementen (4,10) angeordnet ist und welches zwei horizontale, im wesentlichen gleich lange Auflageschenkel (12;16,20;36,38) in Stützsystem-Längsrichtung (3) aufweist, welche entlang einer Stoßkante (30) miteinander verbunden sind.

9. Stützsystem nach einem der Ansprüche 7 oder 8,
**dadurch gekennzeichnet**, daß die Auflageschenkel (12) punktsymmetrisch zueinander angeordnet sind, wobei der Spiegelpunkt (34) der Längs-Mittelpunkt der Stoßkante (30) der beiden Auflageschenkel (12) ist.

10. Stützsystem nach einem der Ansprüche 1 bis 8,
**dadurch gekennzeichnet**, daß zwei Arten von Auflageschenkeln vorgesehen sind, ein erster u-förmiger Auflageschenkel (16), welcher je einen rechten und einen linken Auflageschenkel-Teil (18) aufweist, welche sich in Stützsystem-Längsrichtung (3) erstrecken, und einen zweiten Auflageschenkel (20), welcher in einen Zwischenraum (22) zwischen dem rechten und linken Auflageschenkel-Teil (18) des ersten Auflageschenkels (16) vertikal einsteckbar ist.

11. Stützsystem nach Anspruch 10,
**dadurch gekennzeichnet**, daß eines der Seiten-Stützelemente (4) einen ersten Auflageschenkel (16) und das andere Seiten-Stützelement (10) einen zweiten Auflageschenkel (20) aufweist und die übrigen Stützsystem-Elemente (6,8) je einen ersten Auflageschenkel (16) und je einen zweiten Auflageschenkel (20) aufweisen.

12. Stützsystem nach Anspruch 2 und einem der Ansprüche 10 oder 11,
**dadurch gekennzeichnet**, daß die Steckvorsprünge (26) und die Steckausnehmungen (24) dreieckförmig sind.

13. Stützsystem nach einem der vorhergehenden Ansprüche,
**dadurch gekennzeichnet**, daß die Stützsystem-Elemente (4,6,8,10) aus flächigem Material, vorzugsweise aus Blech gestanzt oder lasergeschnitten sind und daß aus einem Streifen des flächigen Materials in einem Fertigungsschritt jeweils zwei Auflageschenkel (12;16,20;36,38) gestanzt oder lasergeschnitten sind, wobei der Stanz- oder Schneidrest des einen Auflageschenkels (12;16;36) den anderen Auflageschenkel (12;20;38) bildet.

14. Stützsystem nach einem der Ansprüche 1 bis 12,
**dadurch gekennzeichnet**, daß mindestens einige der Stützsystem-Elemente (4,6,8,10) aus Draht gebogen sind.
